Europäisches Patentamt

(19) European Patent Office

Office européen des brevets

(11) Veröffentlichungsnummer: **0 008 083**
A1

(12) **EUROPÄISCHE PATENTANMELDUNG**

(21) Anmeldenummer: 79102778.2

(22) Anmeldetag: 02.08.79

(51) Int. Cl.³: **C 08 K 9/08,** C 09 B 67/20, C 09 C 3/04, B 01 J 2/12, B 01 J 2/14

(30) Priorität: 15.08.78 CH 8677/78

(71) Anmelder: **CIBA-GEIGY AG, Patentabteilung Postfach, CH-4002 Basel (CH)**

(43) Veröffentlichungstag der Anmeldung: 20.02.80 Patentblatt 80/4

(72) Erfinder: **Dörfel, Werner H., Aumattstrasse 122, CH-4153 Reinach (CH)**
Erfinder: **Medinger, Bernhard, Dr., Neumattring 5, CH-4147 Aesch (CH)**
Erfinder: **Troxler, Eduard, Dr., St. Albanring 220, CH-4052 Basel (CH)**

(84) Benannte Vertragsstaaten: **BE CH DE FR GB IT NL**

(54) Verfahren zur Herstellung von Granulaten schwerschmelzbarer Zusatzstoffe für Kunststoffe, insbesondere von Pigmenten, durch thermische Rollgranulierung und die so erhaltenen Granulate.

(57) Verfahren zur Herstellung von Granulat von schwerschmelzbaren Zusatzstoffen für Kunststoffe, insbesondere von Pigmenten, durch thermische Rollgranulierung, dadurch gekennzeichnet, daß man den Zusatzstoff in Pulverform mit einem Granulierhilfsmittel vermischt, das zwischen 30–200° C erweicht und eine Teilchengröße von 0,1–2,0 mm aufweist und diese Mischung einer schonenden Drehbewegung unterwirft, wobei gleichzeitig mittels einer Heizquelle Erwärmung bis mindestens zum beginnenden Erweichen des Granulierhilfsmittels erfolgt.

EP 0 008 083 A1

ACTORUM AG

0008083

3-11975/+


ｒ‥‥‥‥‥‥‥‥ＡＵＥＲＴ
Ｇ‥‥‥‥‥‥‥‥ｔｅ

## Thermische Rollgranulierung

    Die vorliegende Erfindung betrifft ein Verfahren zur thermischen Rollgranulierung von schwerschmelzbaren Zusatzstoffen für Kunststoffe, unter schonenden Bedingungen.

    Verfahren zur Herstellung von Granulaten schwerschmelzbarer Zusatzstoffe für Kunststoffe sind aus den DE-PS 1,542,058, DE-PS 1,642,990 und US-PS 3,778,288 bekannt. Bei diesen Verfahren werden mittels hochtouriger Rühr-/Mischaggregate durch Reibungswärme höhere Temperaturen erzeugt, sodass eine Komponente des zu mischenden Gemenges schmilzt und als Granulierflüssigkeit dient. Durch die Kräfte, die bei hochtourigen Mischprozessen einwirken, wird die Agglomerationsbildung derart beeinflusst, dass die Dispergierbarkeit des so erhaltenen Granulates in erheblichem Masse beeinträchtigt wird, was sich insbesondere bei Pigmenten nachteilig auswirkt. Eine befriedigende Dispergierbarkeit kann zwar in Einzelfällen dadurch erreicht werden, dass man grosse Mengen des Granulierhilfsstoffes eventuell zusammen mit Dispergierhilfsstoffen verwendet. Meistens sind aber grössere Anteile dieser Zusatzstoffe unerwünscht, wenn man beliebige Substrate pigmentieren will, die im allgemeinen nur wenig Fremdsubstanz aufnehmen können, ohne ihre physikalischen Eigenschaften zu verändern.

Aus der DE-OS 2,540,355 ist ein "Verfahren zur Herstellung nicht stäubender, gut dispergierbarer Pigmentgranulate" bekannt, das jedoch auf der Verwendung von organischen Lösungsmitteln basiert, was etliche Nachteile mit sich bringt: Explosions- und Brandgefahr (Inertisierung notwendig), Regeneration der Lösungsmittel, ökologische Probleme.

Es wurde nun gefunden, dass die erwähnten Nachteile vermieden werden, wenn man den zu granulierenden Zusatzstoff in Pulverform mit einem Granulierhilfsmittel vermischt, das zwischen 30-200°C erweicht und eine Teilchengrösse von 0,1-2,0 mm, bevorzugt 0,1-1,0 mm und insbesondere 0,1-0,5 mm aufweist und diese Mischung einer schonenden Drehbewegung unterwirft, wobei gleichzeitig mittels einer Heizquelle Erwärmung bis mindestens zum beginnenden Erweichen des Granulierhilfsmittels erfolgt.

Das erfindungsgemässe Verfahren eignet sich zur Granulierung von schwerschmelzbaren Zusatzstoffen für Kunststoffe, insbesondere von Pigmenten und vorzugsweise von organischen Pigmenten. Es können aber auch andere Zusatzstoffe, wie beispielsweise Antioxidantien und Lichtschutzmittel nach dem erfindungsgemässen Verfahren granuliert werden.

Die erfindungsgemäss verwendbaren organischen Pigmente können den verschiedensten Klassen angehören, bei-

0008083

spielsweise der Klasse der Azo-, Azomethin-, Anthrachinon-,
Phthalocyanin-, Nitro-, Perinon-, Perylen-, Chinophthalon-,
Dioxazin-, Thioindigo-, Iminoisoindolinon- oder Chinacridonpigmente. Auch Metallkomplexe, beispielsweise von Azo-,
Azomethin- oder Methinfarbstoffen mit Pigmentcharakter sind
geeignet. Ebenso können auch Russ, und anorganische Pigmente
wie $TiO_2$, Eisenoxid, Bleichromate, sowie Gemische verschiedener Pigmente verwendet werden.

Anstelle reiner Pigmente oder Pigmentmischungen
können auch fertige Pigmentpräparate verwendet werden; das
sind Zubereitungen enthaltend neben dem Pigment beispielsweise
20-90 %, vorzugsweise zwischen 40-60 % eines Trägerstoffes.

Die Pigmente liegen vorteilhaft in einer fein
verteilten Form vor, d.h. die Teilchengrösse liegt zweckmässig zwischen 0,01-5 $\mu$, wie man sie beispielsweise
durch Mahlen oder Kneten der Rohpigmente gegebenenfalls in
Gegenwart von Lösungsmitteln und anderen Zusatzstoffen oder
durch geeignete Steuerung des Syntheseverfahrens erhält.
Sie werden im allgemeinen in Form trockener Pulver verwendet, die jedoch noch so viel Restfeuchtigkeit enthalten
dürfen, dass der Granulierprozess bzw. die Qualität des
hergestellten Granulates nicht beeinträchtigt werden. In
der Regel bedeutet das, dass die Pulver bis zu 10% Restfeuchtigkeit enthalten können.

Als Granulierhilfsstoffe eignen sich vorzugsweise synthetische, halbsynthetische und natürliche Harze.
Dabei kann es sich bei den synthetischen oder halbsynthetischen Harzen um Polymerisations-, Polykondensations- oder
Polyadditionsprodukte handeln. Prinzipiell können alle in
der Lack- und Druckfarbenindustrie gebräuchlichen Harze und Bindemittel verwendet werden, wie sie beispielsweise in den Lackrohstofftabellen von Karsten 5. und 6. Auflage, Hannover 1972 resp. 1977 und/oder in dem Werk über Lackkunstharze von Wagner und Sarx, 5. Auflage, München 1971, beschrieben sind. Auch hochmolekulare Verbindungen mit Kunststoff-Charakter, wie sie beispielsweise im Kunststoff-Taschenbuch des Carl-Hanser-Verlages, München (20. Auflage 1977) beschrieben sind, können gegebenenfalls als Granulierhilfsmittel verwendet werden. Vorzugsweise wird man solche Harze verwenden, die nicht an der Luft oder mit sich selbst chemisch weiterreagieren und eventuell vernetzen.

Alle diese Harze können einzeln oder in Mischungen verwendet werden, sofern sie zwischen 30 und 200°C, vorzugsweise zwischen 30 und 150°C und insbesondere zwischen 50 und 120°C erweichen.

Bevorzugte Harzklassen sind die folgenden:
a)     Kolophonium und seine Derivate in allen Formen, beispielsweise hydriert, di- oder polymerisiert, verestert mit ein- oder mehrwertigen Alkoholen, mit Harzbildnern wie Acrylsäure und Butandiol oder Maleinsäure und Pentaerythrit, modifiziertes Kolophoniumharz, Calcium- oder Zinksalze des Kolophoniums, Abietinsäure und deren Ester. Die löslichen, mit Kolophonium modifizierten Phenolharze und Harze auf Basis von Acrylverbindungen, sowie andere natürliche Harze, wie Schellack und andere Kopale, sowie Salze des Rosinamins,

b)     Maleinatharze, ölfreie Alkydharze, styrolisierte Alkydharze, Vinyl-toluol-modifizierte Alkydharze, Alkydharze mit synthetischen Fettsäuren, Leinölalkydharze, Ricinenalkydharze, Ricinusölalkydharze, Sojaölalkydharze, Cocosölalkydharze, Tallöl- und Fischölalkydharze und acrylierte Alkydharze,

c)      Terpenharze und Terpenphenolharze

d)      Polyvinylharze wie: Polyvinylacetat, Polyvinylchlorid und -vinylidenchlorid, Polyvinylacetale, Polyvinyläther, Misch- und Pfropfpolymere mit verschiedenen Vinylmonomeren, Polyacrylsäureharze, wie Acrylsäureester und
Methacrylsäureester und ihre Mischpolymerisate.

e)      Styrolpolymerisate und -mischpolymerisate,

f)      Polyolefine, z.B. Polyäthylen, Polypropylen, Polybutylen, Polyisobutylen, Polyisopren, substituierte Polyolefine, halogenierte Polyolefine und ihre Mischpolymerisate, wie Aethylen-, Vinylacetatmischpolymerisate und andere Kunstharze auf Basis ungesättigter Kohlenwasserstoffe,
z.B. niedrigmolekulare Polystyrole, insbesondere aber die
unter der Bezeichnung Petroharze bekannten Polyolefine
eines mittleren Polymerisationsgrades vorzugsweise mit
einem Molgewicht von 300-5000,

g)      Polyamid- und Polyesterharze, wie lineare oder
verzweigte Polyesterharze auf Basis von Phthalsäure, Isophthalsäure, Adipinsäure oder Sebacinsäure,

h)      Cumaron-, Inden-, Cumaron-Inden- und Ketonharze.

Als weitere Granulierhilfsmittel seien feste
Weichmacher oder weichmacherähnliche Substanzen genannt,
wie Cycloalkyl-, Aryl- oder Aralkylester von Dicarbonsäuren, wie z.B. Dicyclohexyl-, Diphenyl- oder Dibenzylester
der Phthalsäure, Ester der Phosphorsäure, beispielsweise Triphenylphosphat, Arylsulfonsäureester des Phenols und
des Kresols, Arylcarbonsäureester, beispielsweise Trimethyloläthantribenzoat, sowie Erdalkalimetallsalze von Fettsäuren mit 12-24 C-Atomen, beispielsweise Mg-Behenat und
-Stearat und auch wachsartige Verbindungen wie z.B. Polyolefinwachse, insbesondere Polyäthylen-Wachse. Ferner eignen sich als Granulierhilfsmittel auch Polyoxyäthylenglykole und -glykoläther, Polyoxyäthylen-oxypropylenglykole
und -glykoläther, polyoxyäthylierte und/oder polyoxypropylierte Phenole und Amine.

Man verwendet zweckmässig 2-50 Teile, vorzugsweise
5-50 und insbesondere 5-30 Teile des Granulierhilfsmittels
auf 100 Teile des zu granulierenden Stoffes.

Die Korngrösse des Granulierhilfsmittels ist von
entscheidender Bedeutung für die Korngrösse des herzustellenden Granulates. Je nach Einsatzgebiet bzw. Einarbeitungsmethode werden bestimmte Anforderungen an Korngrösse und
Korngrössenverteilung (Granulometrie) des Granulates gestellt.
Bei der Herstellung von Granulaten ist deshalb die Gutkornausbeute wichtig. Dabei versteht man unter Gutkornausbeute
den Anteil am fertigen Granulat, der aus Granulatkörnern
eines bestimmten Grössenbereiches besteht. Da es sich für
viele Kunststoff-Applikationen als vorteilhaft erwiesen hat,
wenn der Korndurchmeser des Granulates zwischen 0,2 mm und
2,0 mm liegt, soll im folgenden unter Gutkornausbeute der
Anteil des erhaltenen Granulates verstanden werden, dessen
Korndurchmesser in diesem Grössenbereich liegt. (Damit ist
selbstverständlich nicht ausgeschlossen, dass für bestimmte
Anwendungsbereiche auch Granulate mit anderen Korngrössen verwendbar oder gar erwünscht sind. Für diese Fälle muss dann
lediglich der Korngrössenbereich des Gutkorns entsprechend
abgeändert werden.)

- 7 -

Zur Erreichung einer hohen Gutkornausbeute
(0,2 - 2 mm Korndurchmesser) ist es notwendig, dass die
Korngrösse des Granulierhilfsmittels zwischen 0,1 mm und
1,0 mm liegt. Bei kleinerer Korngrösse entsteht kein Granulat
und bei grösserer Korngrösse entsteht ein Granulat mit
schlechter Gutkornausbeute bzw. mit hohem Anteil an Ueberkorn
(Korndurchmesser 2 mm), dessen übrige Eigenschaften deshalb
allerdings nicht nachteilig sein müssen.

Auch bei höheren Zusatzmengen an Granulierhilfsmittel lässt sich eine einwandfreie Granulierung beobachten. Es ist jedoch ein Vorteil der hier beschriebenen Methode, dass sich auch mit geringeren Anteilen des Granulierhilfsmittels gut dispergierbare Granulate herstellen
lassen, wobei die zusätzliche Mitverwendung geringer Mengen
von Dispergierhilfsmittel nicht ausgeschlossen ist. Grössere
Anteile dieser Hilfsmittel sind nämlich unerwünscht, wenn
man mit den Granulaten beliebige Substrate pigmentieren
will, die im allgemeinen nur wenig Fremdsubstanz aufnehmen
können, ohne ihre physikalischen Eigenschaften nachteilig zu
verändern.

Für die Durchführung des erfindungsgemässen Verfahrens verwendet man zweckmässig die bekannten, üblichen
kontinuierlichen und diskontinuierlichen Granulierapparate,
wie beispielsweise Granuliertrommel, Granulierteller, wie
z.B. EIRICH -Teller, und Trockner, beispielsweise Conaform-
oder Taumeltrockner.

Geeignete Heizquellen sind Strahlungsheizung,
wie Mikrowellenstrahlung oder insbesondere IR-Strahlung,
oder Konvektionsheizung, wie Mantel- oder Rührwellenheizung.

Das erfindungsgemässe Verfahren wird zweckmässig
bei einer Temperatur durchgeführt, die mindestens so hoch
liegt, dass das Granulierhilfsmittel zu erweichen beginnt,
zweckmässig aber bei Temperaturen, die etwa 5-30°C darüber
liegen. Während der Erwärmung und bis zum Abschluss der
Granulatbildung soll eine schonende Drehbewegung mit einer
Umfangsgeschwindigkeit von 0,3-2,2 m/sec, vorzugsweise von
0,5-2,0 m/sec stattfinden.

Die erhaltenen Granulate lassen sich für die üblichen Applikationen in Kunststoffen einsetzen und zeigen
die gleich gute Dispergierbarkeit und dieselben Eigenschaften wie die pulverförmigen Zusatzstoffe. Im Gegensatz zu
diesen besitzen sie ein wesentlich kleineres Schüttvolumen,
sind rieselfähig und weitgehend staubfrei und weisen eine
relativ gute mechanische Festigkeit auf, bilden also auch
nach längerer Lagerzeit und während des Transports in Fässern keinen Staub.

Selbstverständlich eignen sich solche Granulate
auch für die Applikation in anderen Substraten, wie beispielsweise in Lacken und Drucktinten, sofern die verwendeten Granulierhilfsstoffe so gewählt werden, dass sie mit
diesen Systemen verträglich sind.

In den nachfolgenden Beispielen bedeuten die Teile, sofern nichts anderes angegeben wird, Gewichtsteile,
die Prozente Gewichtsprozente und die Temperaturen sind in
Celsiusgraden angegeben.

Beispiel 1

80 Teile C.I. Pigment Blue 15:3 in Pulverform
und 20 Teile Polyäthylenglykol (Carbowax 4000 der Firma
Union Carbide) der Korngrösse 0,1-0,4 mm werden in
einem LOEDIGE-Mischer homogen vermischt. In einem EIRICH-
Teller wird diese Mischung bei drehender Bewegung (0,6 m/sec
Umfangsgeschwindigkeit) mittels IR-Lampenheizung auf
100° erwärmt und während 30 Minuten bei dieser Temperatur
gehalten. Das erhaltene Granulat wird nach dem Abkühlen
unter den Erweichungsbereich des Granulierhilfsmittels ausgeladen. Die gewünschte Kornfraktion (0,2-2 mm) wird durch
Sieben abgetrennt. Die in hoher Gutkornausbeute (79 %)
erhaltenen kugelförmigen Granulatkörner besitzen bei der
Einarbeitung z.B. in Weich-PVC-Walzfolien die gleich gute
Dispergierbarkeit und die gleichen koloristischen Eigenschaften wie das pulverförmige Ausgangspigment.

Beispiel 2

80 Teile C.I. Pigment Yellow 110 in Pulverform,
10 Teile Polyäthylenglykol (Carbowax 4000) der Korngrösse
0,1-0,4 mm und 10 Teile Magnesiumstearat als
Dispergierhilfsmittel, werden in einem LOEDIGE-Mischer homogen vermischt. In einem EIRICH-Teller wird diese Mischung
bei drehender Bewegung (0,6 m/sec Umfangsgeschwindigkeit)
mittels IR-Lampenheizung auf 85°C erwärmt und während 30 Minuten bei dieser Temperatur gehalten. Das erhaltene Granulat wird wie in Beispiel 1 beschrieben aufgearbeitet.

Man erhält in hoher Gutkornausbeute (74 %) ein
Pigmentgranulat, welches die gleichen Eigenschaften aufweist wie dasjenige des Beispiels 1.

Beispiel 3

80 Teile C.I. Pigment Yellow 13 in Pulverform,
10 Teile Polyäthylenglykol (Carbowax 4000) der Korngrösse
0,1-0,4 mm und 10 Teile Magnesiumstearat als
Dispergierhilfsmittel, werden in einem LOEDIGE-Mischer homogen vermischt. In einem EIRICH-Teller wird diese Mischung
bei drehender Bewegung (0,6 m/sec Umfangsgeschwindigkeit)
mittels IR-Lampenheizung auf 85°C erwärmt und während 20
Minuten bei dieser Temperatur gehalten. Das erhaltene Granulat wird wie in Beispiel 1 beschrieben aufgearbeitet.

Man erhält in hoher Gutkornausbeute (68 %) ein
Pigmentgranulat, das die gleichen Eigenschaften aufweist
wie dasjenige des Beispiels 1.

Beispiel 4

80 Teile C.I. Pigment Red 144 in Pulverform und
20 Teile Polyäthylenglykol (Carbowax 20 000 der Firma Union
Carbide) der Korngrösse 0,2-0,5 mm werden in einem LOEDIGE-
Mischer homogen vermischt. In einem EIRICH-Teller wird diese Mischung bei drehender Bewegung (0,6 m/sec Umfangsgeschwindigkeit) mittels IR-Lampenheizung auf 100° erwärmt
und während 30 Minuten bei dieser Temperatur gehalten. Das
erhaltene Granulat wird wie in Beispiel 1 beschrieben aufgearbeitet.

0008083

Man erhält in hoher Gutkornausbeute (87 %) ein Pigmentgranulat mit einem Korndurchmesser von 0,2-2 mm, welches bei der Einarbeitung z.B. in Weich-PVC-Walzfolien dieselbe Dispergierbarkeit und die gleichen koloristischen Eigenschaften wie das pulverförmige, stäubende Ausgangspigment aufweist.


**B e i s p i e l    5**

80 Teile C.I. Pigment Red 144 in Pulverform und 20 Teile Hydroabietinsäure (Staybelite Resin der Firma Hercules) von 0,125-0,5 mm Korngrösse werden in einem LOEDIGE-Mischer homogen vermischt. In einem EIRICH-Teller wird diese Mischung bei drehender Bewegung (0,6 m/sec Umfangsgeschwindigkeit) mittels IR-Lampenheizung auf 105°C erwärmt und während 20 Minuten auf dieser Temperatur gehalten. Das erhaltene Granulat wird wie in Beispiel 1 aufgearbeitet.

Man erhält in hoher 63 %iger Gutkornausbeute ein Pigmentgranulat, das die gleichen Eigenschaften wie diejenigen der Beispiele 1-4 aufweist.

**B e i s p i e l    6**

Verwendet man das im Beispiel 5 verwendete rote Pigment, aber anstelle der Hydroabietinsäure dieselbe Menge polymeres α-Methyl-Styrol (Kristallex 3070 der Firma Hercules) von 0,1-1,0 mm Korngrösse als Granulierhilfsmittel und verfährt im Übrigen nach den Angaben des Beispiels 5, jedoch bei einer Temperatur von 75°C, so erhält man ein kugelförmiges Pigmentgranulat von ebenso guter Qualität und Gutkornausbeute (65 %).

B e i s p i e l   7

Verwendet man das im Beispiel 5 verwendete rote
Pigment, aber anstelle der Hydroabietinsäure dieselbe Menge
Neopentylglykoldibenzoat (Benzoflex S-312 der Firma Velsicol International) von 0,1-1,0 mm Korngrösse als Granulierhilfsmittel und verfährt im übrigen nach den Angaben des
Beispiels 5, so erhält man ein Pigmentgranulat von
guter Qualität mit einer Gutkornausbeute von 78 %.

B e i s p i e l   8

70 Teile C.I. Pigment Red 144 in Pulverform und
30 Teile Polyäthylenglykol (Carbowax 4000) von 0,1-0,5 mm
Korngrösse werden in einem LOEDIGE-Mischer homogen vermischt. In einem EIRICH -Teller wird diese Mischung bei drehender Bewegung (0,6 m/sec Umfangsgeschwindigkeit) mit Hilfe eines IR-Strahlers auf 80°C erwärmt und während 30 Minuten bei dieser Temperatur gehalten. Das erhaltene Granulat
wird wie in Beispiel 1 beschrieben aufgearbeitet.

Man erhält ein Pigmentgranulat, das die gleichen
Eigenschaften wie diejenigen der vorhergehenden Beispiele
aufweist. Gutkornausbeute: 89 %.

B e i s p i e l   9

80 Teile C.I. Pigment Red 144 in Pulverform,
10 Teile Polyäthylenglykol (Carbowax 4000) von 0,1-0,5 mm
Korngrösse und 10 Teile Magnesiumstearat als Dispergierhilfsmittel werden in einem LOEDIGE-Mischer homogen vermischt. In einem Taumeltrockner wird diese Mischung bei

0008083

drehender Bewegung (1 m/sec Umfangsgeschwindigkeit) mittels Mantelheizung auf 80°C erwärmt und während 60 Minuten bei dieser Temperatur gehalten. Das erhaltene Granulat wird abgekühlt und ausgeladen. Die gewünschte Kornfraktion wird durch Sieben abgetrennt.

Man erhält ein Pigmentgranulat von ebenso guter Qualität wie sie die im EIRICH-Teller hergestellten Granulate besitzen. Gutkornausbeute: 91%.

B e i s p i e l   10

Verfährt man genau wie in Beispiel 9 beschrieben, jedoch statt in einem Taumeltrockner in einem Conaformtrockner (ebenfalls mit Mantelheizung) bei 1,4 m/sec Umfangsgeschwindigkeit, so erhält man ein kugelförmiges Pigmentgranulat von ebenso guter Qualität. Gutkornausbeute: 95%.

B e i s p i e l   11

80 Teile C.I. Pigment Red 144 in Pulverform und 20 Teile Pentaerythrit-Tetrastearat (Pentaerythritol-Stearinsäureester der Fa. Hercules) von 0,1 - 0,5 mm Korngrösse werden in einem LOEDIGE-Mischer homogen vermischt. In einem EIRICH-Teller wird diese Mischung bei drehender Bewegung (0,6 m/sec Umfangsgeschwindigkeit) mittels IR-Lampenheizung auf 85°C erwärmt und während 10 Minuten auf dieser Temperatur gehalten. Das erhaltene Granulat wird wie in Beispiel 1 aufgearbeitet.

Man erhält in hoher Gutkornausbeute (86 %) ein Pigmentgranulat, das die gleichen Eigenschaften wie diejenigen der Beispiele 1-8 aufweist.

0008083

Beispiel 12

Verfährt man nach den Angaben des Beispiels 11, mit der einzigen Ausnahme, dass man Pentaerythrit-Tetrastearat von 0,5 - 1,0 mm anstatt von 0,1 - 0,5 mm Korngrösse verwendet, so erhält man in etwa gleicher Gutkornausbeute (92 %) ein Granulat mit ebenso guten Eigenschaften.

Beispiel 13

Verfährt man nach den Angaben des Beispiels 11, mit der einzigen Ausnahme, dass man Pentaerythrit-Tetrastearat der Korngrösse 1 - 2 mm verwendet, so beträgt die Gutkornausbeute nur 24 %. Der Anteil an Ueberkorn (Korngrösse 2-5 mm) beträgt 65 %.

Beispiel 14

Verfährt man nach den Angaben des Beispiels 11, mit der einzigen Ausnahme, dass man Pentaerythrit-Tetrastearat der Korngrösse <0,1 mm verwendet, so entsteht kein Granulat. Das Granulierhilfsmittel ist zu fein.

Beispiel 15

95 Teile Titandioxyd in Pulverform (Rutil R-HD 6 der Fa. Tioxide International Ltd.) und 5 Teile Vinyl-Kopolymer (Piccotex 100 der Fa. ESSO-Standard) der Korn-grösse 0,1 - 0,5 mm werden in einem LOEDIGE-Mischer homogen vermischt. In einem EIRICH-Teller wird diese Mischung bei drehender Bewegung (0,6 m/sec Umfangsgeschwindigkeit) mittels IR-Lampenheizung auf 80°C erwärmt und während 5 Minuten bei dieser Temperatur gehalten. Das erhaltene Granulat wird wie in Beispiel 1 aufgearbeitet.

Man erhält in 81 %iger Gutkornausbeute ein Pigmentgranulat, das die gleichen Eigenschaften aufweist wie dasjenige des Beispiels 1.

0008083

B e i s p i e l    16

70 Teile Russ in Pulverform (Printex 300 der Fa.
DEGUSSA) und 30 Teile Pentaerythrit-Tetrastearat von 0,1 -
0,5 mm Korngrösse werden in einem LOEDIGE-Mischer homogen
vermischt. In einem EIRICH-Teller wird diese Mischung bei
drehender Bewegung (0,6 m/sec Umfangsgeschwindigkeit)
mittels IR-Lampenheizung auf 100°C erwärmt und während
10 Minuten bei dieser Temperatur gehalten. Das erhaltene
Granulat wird wie in Beispiel 1 aufgearbeitet.

Man erhält in 81 %iger Gutkornausbeute ein Pigmentgranulat,
das die gleichen  Eigenschaften aufweist wie dasjenige des
Beispiels 1.

B e i s p i e l    17

1 Teil eines gemäss obigen Beispielen erhaltenen
Pigmentgranulates wird in einem Gemisch bestehend zu 65%
aus stabilisiertem PVC und 35% aus Dioctylphthalat verrührt.
Die Mischung wird während 3 Minuten bei 140-150°C zwischen
den Walzen eines Kalanders hin- und herbewegt. Man erhält
eine gleichmässig gefärbte Folie ohne unverteilte Pigmentagglomerate.

- 16 -

0008083

**P a t e n t a n s p r ü c h e**

1.      Verfahren zur Herstellung von Granulat von
schwerschmelzbaren Zusatzstoffen für Kunststoffe durch
thermische Rollgranulierung, dadurch gekennzeichnet, dass
man den Zusatzstoff in Pulverform mit einem Granulierhilfsmittel vermischt, das zwischen 30-200°C erweicht und eine
Teilchengrösse von 0,1- 2,0 mm aufweist und diese Mischung
einer schonenden Drehbewegung unterwirft, wobei gleichzeitig mittels einer Heizquelle Erwärmung bis mindestens zum
beginnenden Erweichen des Granulierhilfsmittels erfolgt.

2.      Verfahren gemäss Anspruch 1, dadurch gekennzeichnet, dass die Zusatzstoffe Pigmente sind.

3.      Verfahren gemäss Anspruch 1, dadurch gekennzeichnet, dass man als Zusatzstoffe organische Pigmente aus der
Klasse der Azo-, Azomethin-, Anthrachinon-, Phthalocyanin-,
Nitro-, Perinon-, Perylen-, Chinophthalon-, Dioxazin-, Thioindigo-, Iminoisoindolinon- oder Chinacridonpigmente, Metallkomplexe, beispielsweise von Azo-, Azomethin- oder Methinfarbstoffen mit Pigmentcharakter oder auch Gemische verschiedener Pigmente verwendet.

4.      Verfahren gemäss Anspruch 1, dadurch gekennzeichnet, dass man als Zusatzstoffe Pigmentpräparate verwendet.

5.      Verfahren gemäss Anspruch 1, dadurch gekennzeichnet, dass man als Granulierhilfsmittel ein synthetisches, halbsynthetisches oder natürliches Harz verwendet.

6.      Verfahren gemäss Anspruch 1, dadurch gekennzeichnet, dass man als Granulierhilfsmittel Weichmacher, Metallseifen oder Wachse verwendet.

7.      Verfahren gemäss Anspruch 1, dadurch gekennzeichnet, dass man Granulierhilfsmittel verwendet, die zwischen 50 und 120°C erweichen.

8.      Verfahren gemäss Anspruch 1, dadurch gekennzeichnet, dass das verwendete Granulierhilfsmittel eine Teilchengrösse von 0,1 - 1,0 mm aufweist.

9.      Verfahren gemäss Anspruch 1, dadurch gekennzeichnet, dass das verwendete Granulierhilfsmittel eine Teilchengrösse von 0,1 - 0,5 mm aufweist.

10.     Verfahren gemäss Anspruch 1, dadurch gekennzeichnet, dass man 2-50 Teile des Granulierhilfsmittels auf 100 Teile des zu granulierenden Zusatzstoffes verwendet.

11.     Verfahren gemäss Anspruch 1, dadurch gekennzeichnet, dass man 5-50 Teile des Granulierhilfsmittels auf 100 Teile des zu granulierenden Zusatzstoffes verwendet.

12. Verfahren gemäss Anspruch 1, dadurch gekennzeichnet, dass man die Wärme mittels Konvektionsheizung zuführt.

13. Verfahren gemäss Anspruch 1, dadurch gekennzeichnet, dass man die Wärme mittels Strahlungsheizung zuführt.

14. Verfahren gemäss Anspruch 1, dadurch gekennzeichnet, dass man bei Temperaturen granuliert, die 5-30°C über der Temperatur liegen, bei der das Granulierhilfsmittel zu erweichen beginnt.

15. Verfahren gemäss Anspruch 1, dadurch gekennzeichnet, dass man bei einer Umfangsgeschwindigkeit von 0,3-2,2 m/sec granuliert.

16. Das gemäss Anspruch 1 erhaltene Granulat.